# EUROPEAN PATENT SPECIFICATION

(11) **EP 0 398 475 B1**
(45) Date of publication and mention of the grant of the patent: **18.10.1995**
(21) Application number: 90303032.8
(22) Date of filing: 21.03.1990
(51) Int. Cl.: H04N 5/30, G03G 5/02, G03G 15/22

(54) **Photosensitive medium for recording charge latent image and recording method thereof**
Lichtempfindliches Medium zur Aufnahme von latentem Ladungsbild und Wiedergabeverfahren dafür
Support photosensible pour l'enregistrement d'image de charge latente et méthode de reproduction

(30) Priority: 24.03.1989 JP 72637/89; 31.03.1989 JP 83755/89
(43) Date of publication of application: 22.11.1990
(73) Proprietor: VICTOR COMPANY OF JAPAN, LTD., Yokohama-Shi, Kanagawa-Ken (JP)
(72) Inventor: Takanashi, Itsuo, Kamakura-Shi, Kanagawa-Ken (JP); Nakagaki, Shintaro, Ooba, Fujisawa-Shi, Kanagawa-Ken (JP); Shinonaga, Hirohiko, Kohoku-Ku, Yokohama-Shi, Kanagawa-Ken (JP); Asakura, Tsutou, Yokohama-Shi, Kanagawa-Ken (JP); Furuya, Masato, Yokosuka-Shi, Kanagawa-Ken (JP); Suzuki, Tetsuji, Yokosuka-Shi, Kanagawa-Ken (JP)
(74) Representative: Crawford, Andrew Birkby

(56) References cited:
- EP-A- 0 342 967
- EP-A- 0 382 492
- GB-A- 1 512 670
- US-A- 4 296 478
- US-A- 4 786 971

## Description

### BACKGROUND OF THE INVENTION

This invention relates to a photosensitive medium for recording a charge latent image and a recording method thereof.

In compliance with an increased demand for a reproduced image with high picture quality and high resolution in recent years, as well known, various systems such as so-called EDTV (Extended Definition TV) system, or HDTV (High Definition TV) system have been proposed for a television system. In order to obtain a reproduced image with high picture quality and high resolution, it is required to provide an image pickup device capable of producing a video signal from which a high picture quality and high resolution image can be recreated. However, for conventional image pickup devices using an image pickup tube, it is difficult to generate such a video signal. The reasons for this are as follows: Since there is a limit to the reduction of the diameter of an electron beam in the pickup tube, high resolution image reproduction by reduction of the diameter of the electron beam cannot be expected. Alternatively, if the target area of the pickup tube is increased, the level of the output signal will be reduced because of the increased output capacity which is proportional to the area of the target. Therefore, high resolution image reproduction by the increase of the target area cannot be realistic. Furthermore, in the case of an image pickup device for a moving picture, since the frequency range of such a video signal reaches several tens to several hundreds MHz for implementation of the high resolution image, the increase of output capacity, i.e. the increase of target area is not preferable.

On the other hand, an increase of pixels or downsizing a pixel of solid state image sensors has difficulties known to the industry.

As stated above, conventional image pickup devices of either a pickup tube or a solid state sensor could not satisfactorily generate such a video signal to provide a reproduced image of high picture quality and high resolution because of the inevitable use of an image sensor for the construction thereof. In order to solve this, the assignee of this application has already proposed an imaging system and a recording system to obtain a high resolution optical image by an image pickup device using a photo-to-photo transducer, and to record such an optical image as a charge image of high resolution onto a charge accumulation layer (or a charge holding layer) by using a photo-to-charge transducer.

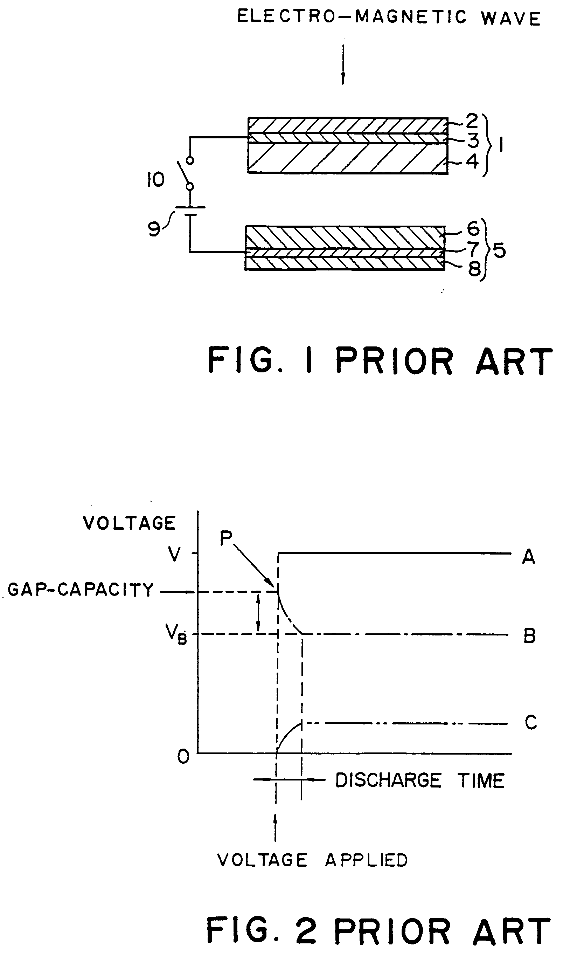

The recording system using a photo-to-charge transducer will be explained with reference to Fig. 1.

Throughout the drawings, like reference numerals and letters are used to designate like or equivalent elements for the sake of simplicity of explanation.

The photosensitive medium 1 for recording a charge latent image shown in Fig. 1 is composed of a glass substrate 2 allowing an electro-magnetic wave to pass therethrough, an electrode 3 also allowing the electro-magnetic wave to pass therethrough and a photo-conductive layer 4 composed of a photo-conductive material, such as α-Se (amorphous Selenium) and PVK (Poly-N-Vinylcarbazole), the impedance of which is varied accordingly with the intensity of the electro-magnetic wave. These members are laminated in order, thus constituting the photosensitive medium 1. The electro-magnetic wave in this specification includes an electro-magnetic radiation beam such as X-rays, γ-rays, radio wave or light.

A recording medium 5 is placed to face the photosensitive medium 1 on the side of the photo-conductive layer 4 thereof through a specific gap. The recording medium 5 is composed of a substrate 8, an electrode 7 and a charge holding layer 6 laminated in order. The charge holding layer 6 thus faces the photo-conductive layer 4 in the configuration.

A d.c. voltage source 9 applies a voltage across the electrodes 3 and 7 through a switch 10.

In the configuration, when the electro-magnetic wave is emitted to the glass substrate 2 to pass therethrough and reach the photo-conductive layer 4 through the electrode 3, the impedance thereof is varied accordingly with the intensity of the electro-magnetic wave. A charge latent image according to the intensity is thus recorded on the charge holding layer 6 of the recording medium 5 by discharge of the electric field generated due to the voltage which is applied across the electrodes 3 and 7.

This configuration has the disadvantage that the photosensitive medium 1 or recording medium 5 may be broken down when the voltage is rapidly applied thereto.

The cause of the breakdown will be explained with reference to Fig. 2 showing the graphs which represent voltages of the parts in the configuration in the case of applying the voltage across the electrodes 3 and 7.

In Fig. 2, the graph A expresses the inter-electrode voltage applied across the electrodes 3 and 7, the graph B the gap voltage across the gap and the graph C the surface potential of the recording medium 5 due to discharged charges, and the point P the voltage across the gap when the inter-electrode voltage is initially applied.

The switch 10 is closed to cause the d.c. voltage source 9 to apply the voltage across the electrodes 3 and 7. The inter-electrode voltage rises momentarily and rapidly at the time, as represented by the graph A. The gap voltage (the graph B) at the time is depicted by the point P which is the voltage of the gap divided by each equivalent capacity of the photo-conductive layer 4, the gap and the charge holding layer 6 and exceeds over the discharge-starting voltage V_{B}.

Discharge then occurs and the surface potential of the medium 5 (the graph C) rises with a certain time constant until the gap voltage becomes lower than the discharge-starting voltage V_{B}.

As is already described, the momentary large voltage to the gap and also the momentary rise of discharge voltage may cause the breakdown of the solid portion of the photo-conductive layer 4 and the charge holding layer 6. Irregularity or pin holes on the solid portion which lead the electric field to converge thereon also may cause breakdown.

EP-A-0382492, published after the priority date of this patent, discloses an arrangement similar to that described above in which an insulating layer is laminated onto the surface of the photo-conductive layer in order to concentrate the dispersed charged particles whereby to improve the resolution of the image formed.

GB-1512670 discloses an arrangement in accordance with the preamble of claims 1 and 3, similar to that shown in figure 1. The arrangement described therein is particularly concerned with altering the contrast of the final image by varying the process characteristic Gamma.

The present invention provides an electrostatic imaging device comprising a photosensitive medium and a recording medium arranged to face each other across a gap, the photosensitive medium comprising a first electrode and a photo-conductive layer and the recording medium comprising a second electrode and a charge holding layer; and
means arranged to apply a predetermined voltage across said electrodes;
the device being arranged such that an electromagnetic wave corresponding to a charge latent image to be recorded may be applied to said photoconductive layer through said first electrode
characterized in that the photosensitive medium further comprises an insulator layer laminated onto said photo-conductive layer and which faces said charge holding layer across said gap, the insulator layer being arranged to prevent breakdown of said photosensitive medium and the recording medium when said predetermined voltage is applied.

The present invention also provides a method of recording a charge latent image on a recording medium comprising arranging a photo-conductive layer and a charge holding layer to face each other across a gap, each of said layers having an electrode on a surface thereof, applying a predetermined voltage across said two layers by way of said two electrodes to generate discharge between said two layers, applying an electro-magnetic wave corresponding to a charge latent image to be recorded to said photo-conductive layer through said electrode thereof while said discharge is being generated whereby to vary the impedance of said photo-conductive layer and to record said charge latent image on said charge holding layer, characterized in that:
said voltage applied across said two layers has a rising time constant greater than or equal to the time constant of said spark discharge.

The present invention has the advantage that breakdown of the solid portions of a photosensitive medium and a recording medium is prevented.

In the accompanying drawings:
Fig. 1 shows a conventional charge latent image recording method using a photo-to-charge transducer;
Fig. 2 is graphical representation of the voltages of the parts in the configuration shown in Fig. 1;
Fig. 3 shows a preferred embodiment of a photosensitive medium for recording a charge latent image according to the present invention;
Fig. 4 is a view for explaining a charge latent image recording method using the photosensitive medium shown in Fig. 3;
Fig. 5 shows another preferred embodiment of a charge latent image recording method according to the present invention
Fig. 6 shows a further preferred embodiment of a charge latent image recording method according to the present invention;
Fig. 7 is graphical representation of voltages of the parts of the preferred embodiment shown in Fig. 5;

The present invention will be explained in detail, with reference to the accompanying drawings.

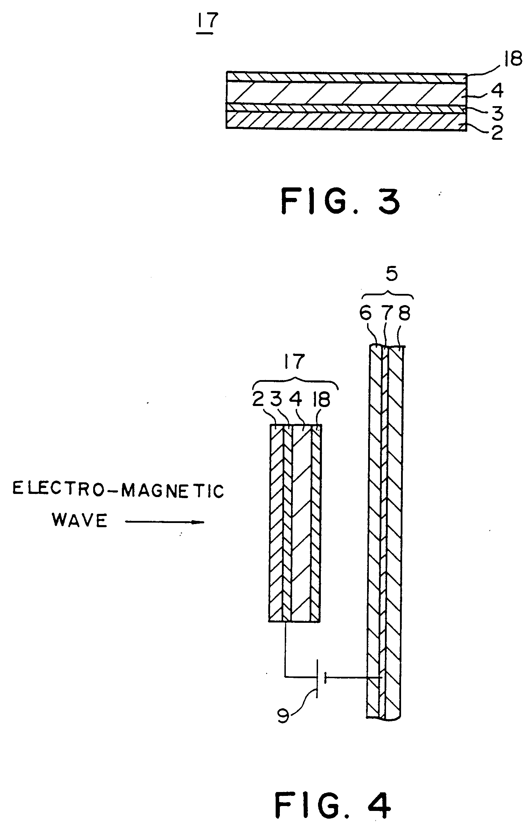

The photosensitive medium 17 for recording a charge latent image shown in Fig. 3, is composed of a glass substrate 2 allowing an electro-magnetic wave, an electrode 3 also allowing an electro-magnetic wave, a photo-conductive layer 4 composed of a photo-conductive material, such as α-Se or PVK, whose impedance is varied accordingly with the intensity of the electro-magnetic wave and a protective layer 18 composed of an insulator such as SiO₂, silicon Nitride, PMMA (Polymethylmethacrylate) or resin (silicon, etc.) for preventing a solid portion of such as the photo-conductive layer 4 from being broken down. These members are laminated in order, for constituting the photosensitive medium 17.

Next, a charge latent image recording method using the photosensitive medium 17 will be explained with reference to Fig. 4.

In Fig. 4, the recording medium 5 is placed to face the photosensitive medium 17 at the side of the protective layer 18 thereof, through a gap having predetermined width. The recording medium 5 is composed of a substrate 8, an electrode 7 and a charge holding layer 6, laminated in order. The charge holding layer 6 faces the protective layer 18 in the configuration. A d.c. voltage source 9 applies a voltage across the electrodes 3 and 7.

The recording operation of the configuration is the same as that explained with reference to Fig. 1. The breakdown-endurability will be lowered if there is a damaged portion such as a pin hole. However, since the photosensitive medium 17 is provided with the protective layer 18, the solid portion of the photosensitive medium 17 is prevented from being broken down or the photo-conductive layer 4 is prevented from being damaged.

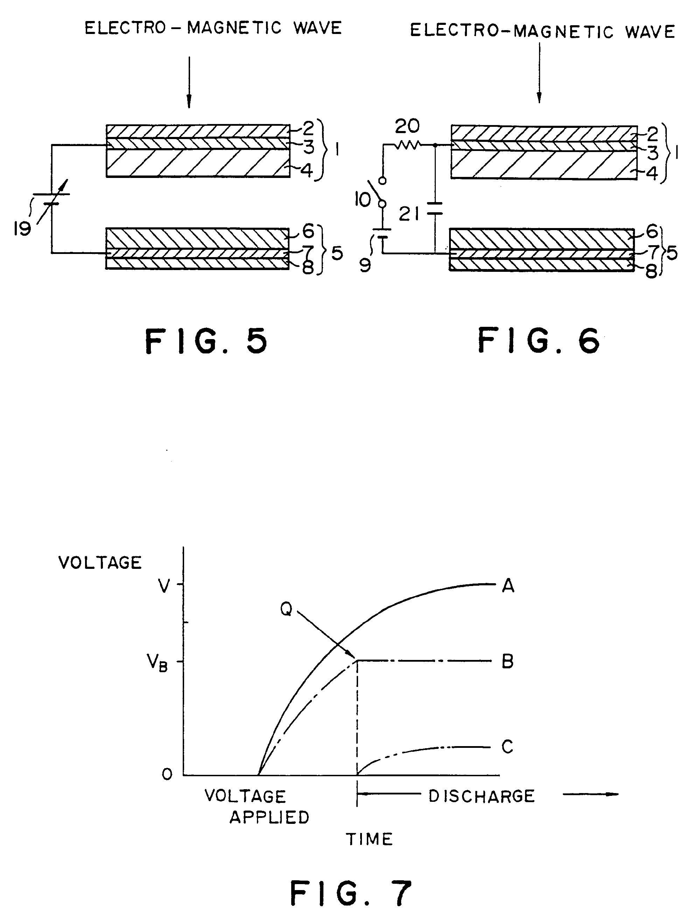

Another preferred embodiment of the charge latent image recording method will be explained with reference to Fig. 5.

In Fig. 5, there is provided a variable d.c. voltage source 19, instead of the d.c. voltage source 9 and the switch 10 shown in Fig. 1. The voltage source 19 gradually increases output voltage thereof to lengthen the rise time of the voltage to longer than that of a surface potential of the recording medium 5 due to discharged charges, or the rise time constant of the voltage longer than that of discharge.

Accordingly, the solid portions of the photosensitive medium 1 and the recording medium 5 are prevented from being broken down and the photo-conductive layer 4 is prevented from being damaged.

Fig. 7 shows the curves of time-varying voltages at the time, with respect to the charge latent image recording method explained with reference to Fig. 5.

The graphs A, B and C represent an inter-electrode voltage applied across the electrodes 3 and 7, a gap voltage across the photosensitive medium 1 and the recording medium 5 and a medium-surface potential due to discharged charges, respectively. The point Q represents the gap voltage which has reached the discharge starting potential V_{B}.

As is understood by Fig. 7, the gradually increased inter-electrode voltage (the graph A) by the voltage source 19 causes the gap voltage (the graph B) to be gradually increased accordingly with the inter-electrode voltage. The gap voltage reaches the discharge starting potential V_{B} (the point Q) to initiate discharge. The discharge then starts and discharged charges are accumulated on the medium surface in association with the increasing gap voltage. Accumulated charges result in potential rise of the medium surface (the graph c) and cancel increment of the gap voltage, so that the gap voltage is never increased beyond the discharge starting potential V_{B}. The solid portions of the photosensitive medium 1 and the recording medium 5 are therefore prevented from breaking down.

Fig. 6 shows a further preferred embodiment of the charge latent image recording method according to the present invention. In Fig. 6, there is provided a time constant circuit consisting of a resistor 20 and a capacitor 21 combined with the d.c. voltage source 9 and the switch 10, instead of the variable d.c. voltage source 19 in Fig. 5. The time constant properly decided by the resistor 20 and capacitor 21 causes the gap voltage to be gradually increased so as to produce the same effect as that in the embodiment shown in Fig. 5.

The time constant of the inter-electrode voltage larger than that of the discharge consequently causes the solid portions of the photosensitive medium 1 and the recording medium 5 to be prevented from breaking down or the photo-conductive layer 4 from being damaged.

## Claims

1. An electrostatic imaging device comprising a photosensitive medium (17) and a recording medium (5) arranged to face each other across a gap, the photosensitive medium (17) comprising a first electrode (3) and a photo-conductive layer (4) and the recording medium (5) comprising a second electrode (7) and a charge holding layer (6); and
means arranged to apply a predetermined voltage across said electrodes;
the device being arranged such that an electromagnetic wave corresponding to a charge latent image to be recorded may be applied to said photoconductive layer (4) through said first electrode (3)
characterized in that the photosensitive medium (17) further comprises an insulator layer (18) laminated onto said photo-conductive layer (4) and which faces said charge holding layer (6) across said gap, the insulator layer (18) being arranged to prevent breakdown of said photosensitive medium and the recording medium when said predetermined voltage is applied.

2. A photosensitive medium as claimed in claim 1, wherein said insulator layer is composed of resin.

3. A method of recording a charge latent image on a recording medium (5) comprising arranging a photo-conductive layer (4) and a charge holding layer (6) to face each other across a gap, each of said layers having an electrode (3,7) on a surface thereof, applying a predetermined voltage across said two layers by way of said two electrodes (3,7) to generate discharge between said two layers, applying an electro-magnetic wave corresponding to a charge latent image to be recorded to said photo-conductive layer through said electrode thereof while said discharge is being generated whereby to vary the impedance of said photo-conductive layer and to record said charge latent image on said charge holding layer (6), characterized in that:
said voltage applied across said two layers has a rising time constant greater than or equal to the time constant of said discharge.

## Patentansprüche

1. Elektrostatische Abbildungsvorrichtung, aufweisend ein lichtempfindliches Medium (17) und ein Aufzeichnungsmedium (5), die einander über einen Spalt gegenüberliegen, wobei das lichtempfindliche Medium (17) eine erste Elektrode (3) und eine photoleitende Schicht (4) aufweist und das Aufzeichnungsmedium (5) eine zweite Elektrode (7) und eine Ladungshalteschicht (6) aufweist; und
eine Einrichtung, die dazu ausgelegt ist, eine vorbestimmte Spannung über die Elektroden zu legen;
wobei die Vorrichtung dazu ausgelegt ist, daß eine elektromagnetische Schwingung entsprechend einem latenten Ladungsbild, das aufzuzeichnen ist, an die photoleitende Schicht (4) über die erste Elektrode (3) anlegbar ist,
**dadurch gekennzeichnet,**
daß das lichtempfindliche Medium (17) ferner eine Isolatorschicht (18) aufweist, die auf die photoleitende Schicht (4) laminiert ist und die der Ladungshalteschicht (6) über den Spalt gegenüberliegt, wobei die Isolatorschicht (18) dazu ausgelegt ist, einen Durchschlag des lichtleitenden Mediums und des Aufzeichnungsmediums bei Anlegen der vorbestimmten Spannung zu verhindern.

2. Lichtleitendes Medium nach Anspruch 1, in welchem die Isolatorschicht aus Harz aufgebaut ist.

3. Verfahren zur Aufzeichnung eines latenten Ladungsbildes auf einem Aufzeichnungsmedium (5), umfassend die Anordnung einer photoleitenden Schicht (4) und einer Ladungshalteschicht (6) so, daß diese sich über einen Spalt gegenüberliegen, wobei jede dieser Schichten eine Elektrode (3, 7) auf einer ihrer Oberflächen aufweist, Anlegen einer vorbestimmten Spannung über die beiden Schichten mittels der beiden Elektroden (3, 7) zur Erzeugung einer Entladung zwischen den beiden Schichten, Anlegen einer elektromagnetischen Schwingung entsprechend einem latenten Ladungsbild, das aufzuzeichnen ist, an die photoleitende Schicht über deren Elektrode, während die Entladung hervorgerufen wird, um hierdurch die Impedanz der photoleitenden Schicht zu variieren und das latente Ladungsbild auf der Ladungshalteschicht (6) aufzuzeichnen,
**dadurch gekennzeichnet**,
daß die über die beiden Schichten angelegte Spannung eine Anstiegszeitkonstante aufweist, die größer oder gleich der Zeitkonstanten der Entladung ist.

## Revendications

1. Un dispositif d'imagerie électrostatique comprenant un milieu photosensible (17) et un milieu d'enregistrement (5) agencés de façon à se faire face de part et d'autre d'un intervalle, le milieu photosensible (17) comprenant une électrode (3) et une couche photoconductrice (4) et le milieu d'enregistrement (5) comprenant une deuxième électrode (7) et une couche (6) de maintien de charge; et
un moyen agencé pour appliquer entre lesdites électrodes une tension prédéterminée;
le dispositif étant agencé d'une manière telle qu'une onde électromagnétique qui correspond à une image de charge latente à enregistrer peut être appliquée à ladite couche photoconductrice (4) à travers ladite première électrode (3)
caractérisé en ce que le milieu photosensible (17) comprend en outre une couche isolante (18) qui est stratifiée sur ladite couche photoconductrice (4) et fait face à ladite couche (6) de maintien de charge de l'autre côté dudit intervalle, la couche isolante (18) étant agencée pour empêcher une décharge disruptive dudit milieu photosensible et dudit milieu d'enregistrement lorsque ladite tension prédéterminée est appliquée.

2. Le milieu photosensible selon la revendication 1, dans lequel ladite couche isolante est composée de résine.

3. Un procédé d'enregistrement d'une image de charge latente sur un milieu d'enregistrement (5) comprenant les étapes consistant à agencer une couche photoconductrice (4) et une couche (6) de maintien de charge d'une manière telle qu'elles se font face de part et d'autre d'un intervalle, chacune desdites couches comportant une électrode (3, 7) sur l'une de ses surfaces, appliquer au moyen desdites deux électrodes (3, 7) une tension prédéterminée entre lesdites couches afin d'engendrer une décharge entre lesdites deux couches, appliquer à travers ladite électrode de ladite couche photoconductrice une onde électromagnétique qui correspond à l'image de charge latente à enregistrer sur cette couche tandis que ladite décharge est en cours de génération de manière à faire varier ainsi l'impédance de ladite couche photoconductrice et à enregistrer ladite image de charge latente sur ladite couche (6) de maintien de charge, caractérisé en ce que
la constante de temps de montée de ladite tension appliquée entre lesdites deux couches est supérieure ou égale à la constante de temps de ladite décharge.
